# EUROPEAN PATENT APPLICATION

(11) **EP 4 106 132 A1**
(43) Date of publication of application: **21.12.2022**
(21) Application number: 21180052.9
(22) Date of filing: 17.06.2021
(51) Int. Cl.: H02J 7/00, H02J 50/12, H04R 1/10

(54) **CHARGER FOR A HEARING DEVICE**

(71) Applicant: Sonova AG, 8712 Stäfa (CH)
(72) Inventor: AAZAMI, Sahba, 1297 Founex (CH); PROBST, Daniel, 8712 Stäfa (CH); OCHSENBEIN, André, 8633 Wolfhausen (CH); SCHMIDT, Mark, Breslau, N0B 1M0 (CA); KIM, Jaewoo, Waterloo, N2T 2T6 (CA); BAE, MunSoo, Mississauga, L5W 0B3 (CA)
(74) Representative: Liedtke & Partner Patentanwälte

(57) **Abstract**

The invention relates to a charger (1) for at least one hearing device (7), comprising a base part (4) comprising an electronic unit (14), at least one insert (3) comprising a holding cavity (16) and a wireless charging transmitter coil (5), and at least one interface (2) configured to mechanically connect and/or align and electrically connect the insert (3) to the base part (4) and configured to allow separating the insert (3) from the base part (4), wherein the holding cavity(16) is configured to receive a hearing device (7) or a part thereof, the hearing device (7) comprising a wireless charging receiver coil (11), wherein the wireless charging transmitter coil (5) is configured to inductively interact with the receive coil (11).

## Description

### Technical Field

The invention relates to a charger for a hearing device.

### Background of the Invention

In the realm of rechargeable devices the next step towards comfort and usability is the implementation of charging systems which exploit wireless power transfer technology. As well as usability, this technology will afford the product designer the capability of introducing features such as hermetic (life-proof) designs, which in turn, contributes greatly to the reliability, longevity and product safety.

Present designs for wireless power transfer (WPT) concentrate on established standards such as Qi. In these cases the standard dictates the total system operation and performance. For example, the Qi system is based on a close coupled transmit and receive subsystem (and respective front end coils) which can be achieved via flat spiral designs for the transmit and receive coil.

Other systems such as those designed for electric toothbrushes, also exploit designs for closely coupled front ends, in this case taking advantage of cylindrical topology for coil design and achieving high coupling factors via inclusion of magnetic material such as ferrite rods in the receive or the transmit coil design.

Known wireless charging systems (WLCs) concentrate on achieving efficient coupling between the transmit and receive coils via optimizing the proximity of the two coils. This is possible when the design ergonomics of the product allows flexibility in size domain such that one coil design can fit all product form factors. In a hearing device environment, the size domain is the least flexible and can be expected to keep migrating towards confinement and reduction.

### Summary of the Invention

It is an object of the present invention to provide an improved charger for a hearing device.

The object is achieved by a charger according to claim 1.

Preferred embodiments of the invention are given in the dependent claims.

According to the invention, a charger for at least one hearing device comprises a base part comprising an electronic unit, at least one insert comprising a holding cavity and a wireless charging transmitter coil, and at least one interface configured to mechanically connect and/or align and electrically connect the insert to the base part and configured to allow separating the insert from the base part, wherein the holding cavity is configured to receive a hearing device or a part thereof, the hearing device comprising a wireless charging receiver coil, wherein the wireless charging transmitter coil is configured to inductively interact with the wireless charging receiver coil.

In an embodiment, the at least one interface comprises matching pairs of electric contacts on the base part and on the at least one insert to electrically connect the insert to the base part. The electrical contacts may be configured for transfer of power (voltage and current) from the electronic unit in the base part to the wireless charging transmitter coil in the insert, and, depending on the configuration, additional contacts may be provided, e.g. for sensors. These contacts may be active i.e. power and data, or passive (only power).

In an exemplary embodiment, the at least one interface comprises at least two interfaces, wherein at least one of the at least two interfaces is configured to connect to another base part.

In an exemplary embodiment, the wireless charging transmitter coil is configured with a transmit core or with an air core.

In an exemplary embodiment, the wireless charging transmitter coil is configured to be one of the coil types of a flat spiral coil and a cylindrical coil.

In an exemplary embodiment, the flat spiral coil has one of a basically circular outline, a basically oval outline and a rectangular outline with rounded corners.

In an exemplary embodiment, the cylindrical coil is configured as one of a long cylindrical coil and a wide cylindrical coil.

In an exemplary embodiment, the transmit core is arranged to be partially inserted into a wireless charging receiver coil of a hearing device or a part thereof when the hearing device is arranged on or in the insert.

In an exemplary embodiment, the wide cylindrical coil is configured to allow inserting a wireless charging receiver coil of a hearing device or a part thereof when the hearing device is arranged on or in the insert.

According to an aspect of the present invention, the charger may be part of an arrangement, further comprising at least one hearing device comprising a wireless charging receiver coil.

In an exemplary embodiment, the wireless charging receiver coil is the same coil type as the wireless charging transmitter coil.

In an exemplary embodiment, the wireless charging receiver coil and the wireless charging transmitter coil are flat spiral coils, wherein the insert comprises a housing shaped to mechanically align the hearing device or a part thereof on or in the insert in such a way that the wireless charging receiver coil is allowed to inductively interact with the wireless charging transmitter coil.

In an exemplary embodiment, the wireless charging receiver coil and the wireless charging transmitter coil are long cylindrical coils, wherein the transmit core is arranged to be partially inserted in the wireless charging receiver coil when the hearing device or a part thereof is arranged on or in the insert.

In an exemplary embodiment, the wireless charging receiver coil and the wireless charging transmitter coil are wide cylindrical coils, wherein the wireless charging transmitter coil is configured to allow inserting the wireless charging receiver coil when the hearing device or a part thereof is arranged on or in the insert.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitative of the present invention, and wherein:
- Figure 1: is a schematic view of a charger for two hearing devices,
- Figure 2: is a schematic view of a charger for at least one hearing device,
- Figure 3: is a schematic view of an insert configured as or comprising a flat spiral wireless charging transmitter coil,
- Figure 4: is a schematic view of another embodiment of an insert configured as or comprising a flat spiral wireless charging transmitter coil,
- Figure 5: is a schematic view of an insert configured as or comprising a long cylindrical wireless charging transmitter coil with a solid transmit core,
- Figure 6: is a schematic view of an insert configured as or comprising a wide cylindrical wireless charging transmitter coil without a transmit core or with an air core,
- Figure 7: is a schematic view of an insert configured as or comprising a wide cylindrical wireless charging transmitter coil and a transmit core configured as a field enhancer core arrangement,
- Figure 8: is a schematic view of an insert configured as or comprising a flat spiral wireless charging transmitter coil, and
- Figure 9: is a schematic view of an insert configured as or comprising a cylindrical wireless charging transmitter coil with a solid transmit core.

Corresponding parts are marked with the same reference symbols in all figures.

### Detailed Description of Preferred Embodiments

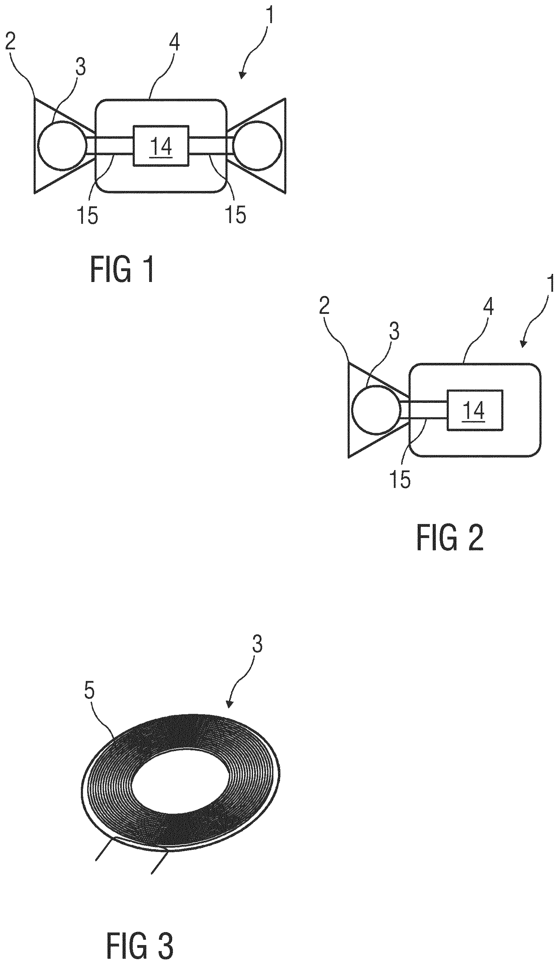

**Figure 1** is a schematic view of a charger 1, e.g. for two hearing devices.
**Figure 2** is a schematic view of a charger 1, e.g. for one hearing device.

The hearing device may comprise a rechargeable battery configured to be charged by the charger 1.

The charger 1 comprises a base part 4, e.g. having an electronic unit 14, an insert 3, e.g. comprising a wireless charging transmitter coil 5 and a holding cavity 16 for receiving a hearing device or part thereof, and an interface 2 between the base part 4 and the insert 3, the interface 2 adapted to mechanically connect and/or align and electrically, in particular galvanically, connect the base part 4 and the insert 3.

Electric, in particular galvanic, contacts 15 from the wireless charging transmitter coil 5 to the electronic unit 14 are provided via the interface 2.

It may be advantageous to separate the insert 3, e.g. comprising power transfer coils, from the main system or base part 4 in favor of a modular structure as shown in Figure 1.

In an exemplary embodiment, the base part 4 may be configured to have two interfaces 2 to host two inserts 3 or one insert 3 and another base part 4. In this way a single charger 1 can operate with a single hearing device or a pair of hearing devices, depending on the user requirements.

The present invention facilitates simplification of the overall charger design by identifying and retaining in fixed format as much as possible of the base part 4, e.g. the electronic unit 14, and offering a standard interface 2 to the insert 3, e.g. comprising the power transfer coils, which may be customized to a desired product line.

The present invention also offers improved flexibility in design, both electrical and mechanical, to achieve optimal thermal management for the charger 1. Heat is generated both in the coils and in the electrical circuits, power transistors, processors. By having these two parts separated, heat may be monitored and managed better via design, e.g. passive: (ventilation, phase-change material that can absorb heat), and/or active: (power control in the base part).

The insert 3 is separable from the base part 4 and may be formed from several different embodiments of integrated inserts 3, e.g. comprising power transmit coils (Tx coils). The interface 2 may be a standard interface 2 between the insert 3 and the base part 4, e.g. comprising the electronic unit 14 of the charger 1.

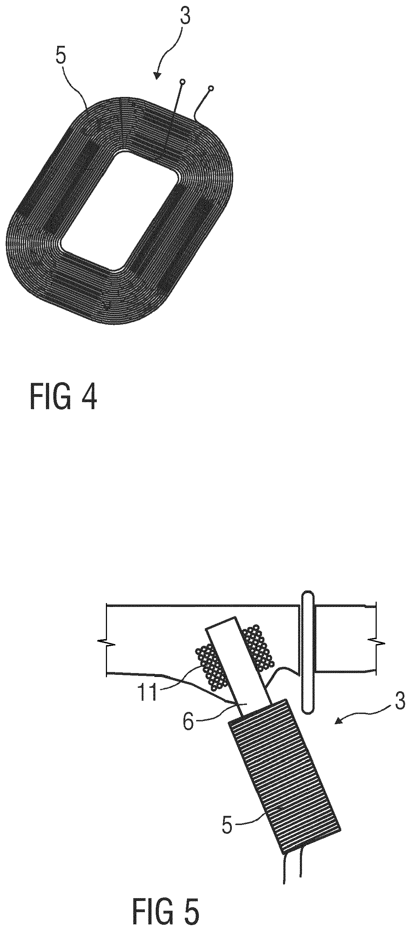

In an exemplary embodiment, the insert 3 may be configured as a flat spiral coil. **Figures 3** **and** **4** are schematic views of inserts 3 configured as or comprising flat spiral wireless charging transmitter coils 5, in figure 3 with a basically circular outline and in figure 4 with a basically oval outline or rectangular outline with rounded corners. A flat spiral wireless charging transmitter coil 5 favors cases in which the mechanical design of the charger 1 and the one or more hearing device allows for flat surface coupling. This is in particular the case if the distance between the wireless charging transmitter coil 5 and a wireless charging receiver coil within the hearing device is small, e.g. less than 1 mm, providing better coupling efficiency. However, precise alignment between the wireless charging transmitter coil 5 and a wireless charging receiver coil may be required.

Coupling in resonant systems is dependent on the geometry of the respective Tx and Rx coils. In this respect, for close or tight coupled systems, the following applies: The distance between the coils is much less than the diameter of the coils. For transformer type coupling (i.e. both coils contain a magnetic core), the distance between the core coupling surface (the gap) should not be more than 1 mm.

In another exemplary embodiment, the insert 3 may be configured as a long cylindrical wireless charging transmitter coil 5 with a solid transmit core 6. **Figure 5** is a schematic view of an insert 3 configured as or with a long cylindrical wireless charging transmitter coil 5 with a solid transmit core 6. In an alternative embodiment, the insert 3 may be configured as a long cylindrical wireless charging transmitter coil 5 without a transmit core 6. If there is a transmit core 6, both the wireless charging transmitter coil 5 and a wireless charging receiver coil 11 as part of a hearing device 7, may be of the same construction so the wireless charging receiver coil 11 may be arranged over the transmit core 6 and the field coupling is enhanced this way. A possible variation is when the wireless charging transmitter coil 5can be without a core and the design allows the insertion of the wireless charging receiver coil 11 into the body of the wireless charging transmitter coil 5 for better magnetic field coupling.

A coil shall be considered long if its length 1 and diameter D do not follow the optimum ratio equation 1/D - 0.3 ... 0.4 for achieving high quality factor Q. Here the quality factor Q is sacrificed for inductance L, and works best for transformer type configurations. A long coil in this sense thus has a ratio 1/D greater than 0.4.

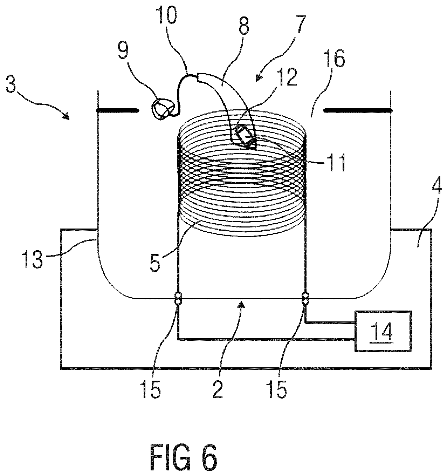

In another exemplary embodiment, the insert 3 may be configured as a wide cylindrical wireless charging transmitter coil 5 without a transmit core 6. **Figure 6** is a schematic view of an insert 3 configured as or with a wide cylindrical wireless charging transmitter coil 5 without a transmit core 6 or with an air core. A hearing device 7, comprising a behind the ear part 8 and an ear level part 9, connected to the behind the ear part 8 by a cable 10, is also shown in figure 6. The behind the ear part 8 includes a wireless charging receiver coil 11 which may be configured as a rectangular coil and which may have a receive core 12. The behind the ear part 8 is at least in part arranged within the insert 3 so that the wireless charging receiver coil 11 can inductively interact with the wireless charging transmitter coil 5.

A coil shall be considered wide if it does not conform to the 1/D - 0.3 ... 0.4, relationship, as stated above. A wide coil in this sense thus has a ratio 1/D less than 0.3.

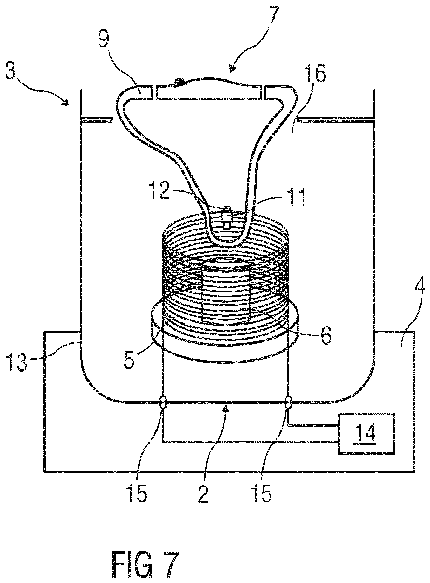

In an exemplary embodiment, the wide cylindrical wireless charging transmitter coil 5 may have a transmit core 6 configured as a field enhancer core or concentrator. **Figure 7** is a schematic view of an insert 3 configured as or with a wide cylindrical wireless charging transmitter coil 5 and a transmit core 6 configured as a field enhancer core arrangement. A hearing device 7, comprising an ear level part 9 is also shown in figure 7. The ear level part 9 includes a wireless charging receiver coil 11 which may be configured as a cylindrical coil and which may have a receive core 12. The ear level part 9 is at least in part arranged within the insert 3 so that the wireless charging receiver coil 11 can inductively interact with the wireless charging transmitter coil 5. Other than a geometrically uniform shaped core, e.g. a cylinder (circular or rectangular cross section, solid or walled with empty center), toroid, or laminated versions of the above, a concentrator has a complex geometry constructed from regular shapes for enhancing (concentrating or lensing) the magnetic field, as shown in Figure 7. This way, the inductive coupling between the wireless charging transmitter coil 5 and the wireless charging receiver coil 11 may be improved. For example, the transmit core 7 configured as a concentrator in figure 7 comprises a cylinder on a base shaped as a cylindrical disk wider than the wireless charging transmitter coil 5.

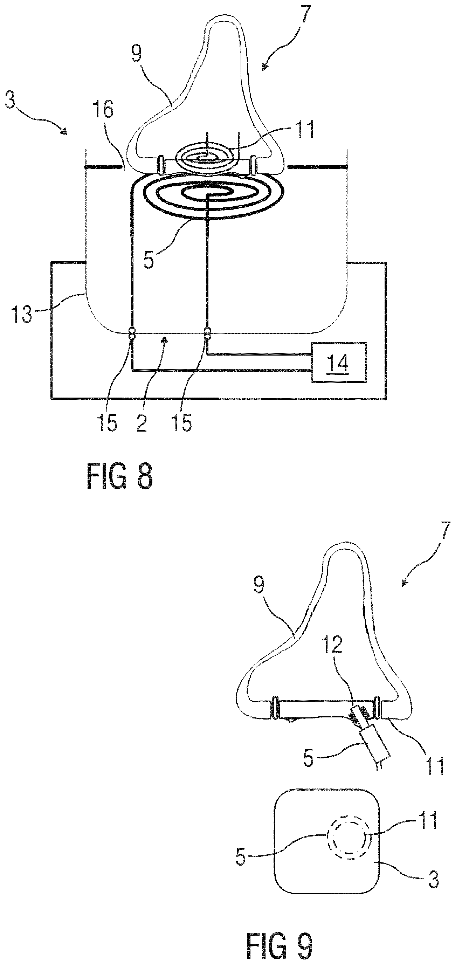

**Figure 8** is a schematic view of an insert 3 configured as or with a flat spiral wireless charging transmitter coil 5. A hearing device 7, comprising an ear level part 9 is also shown in figure 8. The ear level part 9 includes a wireless charging receiver coil 11 which may be configured as a flat spiral coil. The ear level part 9 is arranged on top of the insert 3 so that the wireless charging receiver coil 11 can inductively interact with the wireless charging transmitter coil 5.

**Figure 9** is a schematic view of an insert 3 configured as or with a cylindrical wireless charging transmitter coil 5 with a solid transmit core 6. A hearing device 7, comprising an ear level part 9 is also shown in figure 9. The ear level part 9 includes a wireless charging receiver coil 11 which may be configured as a cylindrical coil which may have a receive core 12 or be arranged on the transmit core 6 for charging. The ear level part 9 is arranged on top of the insert 3 so that the wireless charging receiver coil 11 can inductively interact with the wireless charging transmitter coil 5.

The interface 2 of and/or to the charger 1 or the insert 3 may comprise a housing 13 which may be customized to a shape of the wireless charging receiver coil 11 used in the hearing device 7, wherein said shape may be dependent on a device class, e.g. in the ear (ITE), behind the ear (BTE), etc., of the hearing device 7. The interface 2 may further comprise electric contacts 15 to the base part 4 and any passive supplementary components such as a resonance tuning capacitor.

The present invention facilitates flexibility in the design of a wireless charging system for one or more hearing devices 7 by segregating the base part 4 from the insert 3. The base part 4 may be subject to a unique and reusable design while the insert 3 may be a flexible solution. The base part 4 and the insert 3 may be connected via a unified interface 2. This provides a low-cost method to realize a wireless charging system which can serve multiple device form factors.

### List of References

- 1: charger
- 2: interface
- 3: insert
- 4: base part
- 5: wireless charging transmitter coil
- 6: transmit core
- 7: hearing device
- 8: behind the ear part
- 9: ear level part
- 10: cable
- 11: wireless charging receiver coil
- 12: receive core
- 13: housing
- 14: electronic unit
- 15: electric contact
- 16: holding cavity

## Claims

1. A charger (1) for at least one hearing device (7), comprising a base part (4) comprising an electronic unit (14), at least one insert (3) comprising a holding cavity (16) and a wireless charging transmitter coil (5), and at least one interface (2) configured to mechanically connect and/or align and electrically connect the insert (3) to the base part (4) and configured to allow separating the insert (3) from the base part (4), wherein the holding cavity (16) is configured to receive a hearing device (7) or a part thereof, the hearing device (7) comprising a wireless charging receiver coil (11), wherein the wireless charging transmitter coil (5) is configured to inductively interact with the wireless charging receiver coil (11).

2. The charger (1) according to claim 1, wherein the at least one interface (2) comprises matching pairs of electric contacts (15) on the base part (4) and on the at least one insert (3) to electrically connect the insert (3) to the base part (4).

3. The charger (1) according to claim 1 or 2, wherein the wireless charging transmitter coil (5) is configured with a transmit core (6) or with an air core.

4. The charger (1) according to any one of the preceding claims, wherein the wireless charging transmitter coil (5) is configured to be one of the coil types of a flat spiral coil and a cylindrical coil.

5. The charger (1) according to claim 4, wherein the flat spiral coil has one of a basically circular outline, a basically oval outline and a rectangular outline with rounded corners.

6. The charger (1) according to claim 4, wherein the cylindrical coil is configured as one of a long cylindrical coil and a wide cylindrical coil.

7. The charger (1) according to any one of the claims 3 to 6, wherein the transmit core (6) is arranged to be partially inserted into a wireless charging receiver coil (11) of a hearing device (7) or a part thereof when the hearing device (7) is arranged on or in the insert (3).

8. The charger (1) according to claim 6, wherein the wide cylindrical coil is configured to allow inserting a wireless charging receiver coil (11) of a hearing device (7) or a part thereof when the hearing device (7) is arranged on or in the insert (3).

9. An arrangement, comprising a charger (1) according to any one of the preceding claims and at least one hearing device (7) comprising a wireless charging receiver coil (11).

10. The arrangement of claim 9, wherein the wireless charging receiver coil (11) is the same coil type as the wireless charging transmitter coil (5).

11. The arrangement of claim 10, wherein the wireless charging receiver coil (11) and the wireless charging transmitter coil (5) are flat spiral coils, wherein the insert (3) comprises a housing (13) shaped to mechanically align the hearing device (7) or a part thereof on the insert (3) in such a way that the wireless charging receiver coil (11) is allowed to inductively interact with the wireless charging transmitter coil (5).

12. The arrangement of claim 10, wherein the wireless charging receiver coil (11) and the wireless charging transmitter coil (5) are long cylindrical coils, wherein the transmit core (6) is arranged to be partially inserted in the wireless charging receiver coil (11) when the hearing device (7) or a part thereof is arranged on the insert (3).

13. The arrangement of claim 10, wherein the wireless charging receiver coil (11) and the wireless charging transmitter coil (5) are wide cylindrical coils, wherein the wireless charging transmitter coil (5) is configured to allow inserting the wireless charging receiver coil (11) when the hearing device (7) or a part thereof is arranged on or in the insert (3).
